# EUROPÄISCHE PATENTSCHRIFT

(11) **EP 4 555 225 B1**
(45) Veröffentlichungstag und Bekanntmachung des Hinweises auf die Patenterteilung: **27.05.2026**
(21) Anmeldenummer: 23776308.1
(22) Anmeldetag: 20.09.2023
(51) Int. Cl.: F16B 31/02

(54) **MUTTER**
NUT
ÉCROU

(30) Priorität: 26.09.2022 DE 102022124624
(43) Veröffentlichungstag der Anmeldung: 21.05.2025
(73) Patentinhaber: Weidmüller Interface GmbH & Co. KG, 32758 Detmold (DE)
(72) Erfinder: SCHLINGMANN, Hans, 32805 Horn-Bad Meinberg (DE); NIGGEMANN, Steffen, 33106 Paderborn (DE)
(74) Vertreter: Kleine, Hubertus
(86) Internationale Anmeldenummer: PCT/EP2023/075924
(87) Internationale Veröffentlichungsnummer: WO 2024/068392

(56) Entgegenhaltungen:
- WO-A1-2007/062730
- WO-A1-2022/082065
- DE-B- 1 124 729
- DE-U1- 202014 100 941
- GB-A- 2 566 575
- US-A1- 2006 225 511
- US-A1- 2010 054 891

## Beschreibung

Die Erfindung betrifft eine Mutter mit einem Innengewinde und einer Außenkontur, insbesondere einer Sechskantkontur.

Bei sicherheitsrelevanten Anwendungen ist es oftmals gewünscht oder gefordert, eine Vorspannkraft der Schraubverbindung, auch Schraubenvorspannkraft genannt, bei der Montage und im Betrieb regelmäßig, ggf. kontinuierlich, zu bestimmen und dadurch überwachen zu können. Dieses betrifft z. B. Schraubverbindungen an Rotoren, Rotorblättern, Türmen und/oder Maschinenhäusern von Windkraftanlagen.

Aus der Druckschrift DE 10 2012 005 614 A1 ist eine Schraube einer Schraubverbindung bekannt, in die ein Sensor integriert ist, mit dem eine Belastung dieser Schraube kontinuierlich gemessen werden kann. Dazu ist ausgehend vom Schraubenkopf eine Bohrung in axialer Richtung in die Schraube eingebracht, in der sich ein Sensor befindet, mit dem eine Dehnung der Schraube bzw. ihres Schaftes in axialer Richtung gemessen werden kann. Eine solche Schraube kann in gleicher Weise wie eine nicht mit einem Sensor versehene Schraube eingesetzt werden, wodurch die Möglichkeit zur Messung der Schraubenbelastung auf relativ einfache und unaufwändige Art umgesetzt und auch nachgerüstet werden kann.

Das Dokument WO 2022/082065 A1 offenbart eine weitere Mutter aus dem Stand der Technik.

Für Schraubverbindungen, bei denen ein eingeschraubter oder fest angebrachter Schraubbolzen in Verbindung mit einer aufgeschraubten Mutter eingesetzt wird, ist eine derart leicht integrierbare Belastungsmessung bislang nicht verfügbar.

Als Alternative kann ein ringförmiger Kraftmesssensor ähnlich einer Unterlegscheibe unter der Mutter verwendet werden, die auf den Bolzen aufgeschraubt wird. Um einen derartigen Sensor einsetzen zu können, muss der Schraubbolzen in axialer Richtung eine entsprechende zusätzlich verfügbare Länge aufweisen und es muss radial um den Schraubbolzen ein ausreichender Bauraum für den Sensor vorhanden sein, dessen Durchmesser i. d. R. den Durchmesser der Mutter übersteigt.

Es wäre wünschenswert, wenn auch bei einer Schraubverbindung, bei der eine Mutter auf einen Schraubbolzen aufgeschraubt wird, eine kontinuierliche Belastungsmessung einfach und ohne ein zusätzlich zu montierendes Element möglich wäre. Es ist daher eine Aufgabe der vorliegenden Erfindung, im Zusammenhang mit einer Schraubverbindung mit einem Schraubbolzen oder einer nicht mit einem Belastungssensor ausgestatteten Schraube und einer Mutter eine Belastungsmessung unaufwändig vornehmen und ggf. auch nachrüsten zu können, ohne dass dafür zusätzlicher Bauraum bzw. eine längerer Schraubbolzen benötigt wird.

Diese Aufgabe wird durch eine Mutter mit Innengewinde und Außenkontur mit den Merkmalen von Anspruch 1 gelöst, wobei bei einer solchen Mutter zwischen dem Innengewinde und der Außenkontur von einer Oberseite ausgehend eine Vertiefung eingebracht ist, in die ein Sensor zur Messung einer belastungsbedingten Verformung der Mutter eingesetzt ist.

Der Erfindung liegt die Erkenntnis zugrunde, dass eine Mutter durch Belastung eine Verformung erfährt, die nicht nur unmittelbar im Bereich des Innengewindes vorliegt, sondern sich bis in das Material der Mutter zwischen dem Innengewinde und der Außenkontur erstreckt.

Ein in eine entsprechende Vertiefung in diesem Bereich eingebrachter Sensor ist in der Lage, diese Verformung zu erfassen und erlaubt Rückschlüsse auf die Belastung der Mutter, insbesondere die axial auf die Schraube oder den Schraubbolzen ausgeübte Kraft. Berechnungen von Biegemomenten innerhalb der Mutter bei einer belasteten Schraubverbindung zeigen, dass Axialkräfte innerhalb der Schraubverbindung zu einer Biegung der Mutter führen, die sich bis in den Bereich zwischen dem Innengewinde und der Außenkontur erstrecken, so dass eine von dem Sensor gemessene Biegung in diesem Bereich in eine wirkende Axialkraft in der Schraubverbindung umgerechnet werden kann. Die wirkende Axialkraft entspricht der Schraubenvorspannkraft.

Durch Einsatz des Sensors in diesem Bereich der Mutter bleibt die Außenkontur der Mutter nach wie vor zugänglich, d.h., dass die Mutter in üblicher Weise mit einem an die Außenkontur angepassten Werkzeug festgezogen bzw. gelöst werden kann. Die Mutter kann z.B. mit üblichen Werkzeugen wie einem Maulschlüssel montiert werden. Unter der Voraussetzung, dass der Sensor kabellos auslesbar ist, bzw. unter der Voraussetzung, dass ein Steckverbinder vorgesehen ist, um Kabel eines kabelgebundenen Sensors im Bereich der Mutter trennen zu können, kann auch ein geschlossener Ringschlüssel oder eine Stecknuss verwendet werden. Bei einem kabellos auslesbaren Sensor weist die Mutter eine Einheit zur drahtlosen Übertragung von Sensordaten des Sensors auf.

Aufgrund von Verunreinigungen der Gewindegänge, unterschiedliche Schmierung der Gewindegänge und unterschiedlicher Umgebungsbedingungen kann die tatsächliche Schraubenvorspannkraft von einer nur indirekt über das Anzugs-Drehmoment vorhergesagten abweichen. Die erfindungsgemäße Mutter ermöglicht dagegen die Bestimmung der tatsächlich wirkenden Schraubenvorspannkraft bereits während der Montage einer Schraubverbindung.

Zudem kann während des Betriebes einer Anlage die Höhe der Schraubenvorspannkraft wiederholt oder gar (quasi-) kontinuierlich gemessen, so dass z.B. über einen notwendigen Service (z.B. Nachziehen der Schraubverbindung) entschieden werden kann. Zusätzliche Kräfte, die auf die Schraube wirken, können ebenfalls detektiert werden, um auf eine ungeplante Beanspruchung innerhalb der Anlage zu schließen und weitere Kontroll- oder Korrekturmaßnahmen einzuleiten. Auch Alterserscheinungen der Schraubverbindung, die sich z.B. in einem unerwartet schnellen Nachlassen der Schraubenvorspannkraft zeigen können, können rechtzeitig erkannt werden.

Erfindungsgemäß ist die Vertiefung eine Tasche, die beispielsweise einen quaderförmigen Hohlraum zur Aufnahme des Sensors im Material der Mutter formt. So kann z.B. ein plattenförmig ausgebildeter Sensor in die Mutter eingesetzt sein. Wenn die Außenkontur der Mutter eine Mehrkantkontur ist, insbesondere eine Sechskantkontur, ist die Tasche bevorzugt parallel zu einer Seitenfläche der Mehrkantkontur ausgebildet.

In einer weiteren vorteilhaften Ausgestaltung der Mutter weist der Sensor einen resistiven Dehnungsmessstreifen auf, der bevorzugt auf einem plattenförmigen Träger angeordnet ist. Eine Biegung des Trägers und damit eine Biegebelastung innerhalb des Materials der Mutter kann so erfasst werden. Der Sensor kann alternativ auch auf einem piezoelektrischen Messprinzip beruhen.

Der Sensor ist stoffschlüssig mit der Mutter verbunden, z.B. verschweißt, verlötet und/oder verklebt. So kann zusätzlich ein Kraftschluss und damit eine gute Übertragung der Biegung auf den Sensor erreicht werden. Eine Verklebung kann dabei in Art eines Vergusses in der Vertiefung erfolgen, wodurch der Sensor zusätzlich gegenüber Umwelteinflüssen geschützt wird. Erfindungsgemäß ist mindestens eine Bohrung in eine Seitenfläche der Außenkontur eingebracht, um die stoffschlüssige Verbindung des Sensors mit dem Material der Mutter herzustellen.

Die Erfindung wird nachfolgend anhand eines Ausführungsbeispiels mithilfe von Figuren näher erläutert. Die Figuren zeigen:
- Figur 1a: eine Mutter mit einem Sensor vor dem Einsetzen des Sensors in die Mutter;
- Figur 1b, c: die Mutter aus Figur 1a mit eingesetztem Sensor in zwei verschiedenen Ansichten;
- Figur 2a, b: die Mutter aus Figur 1a mit eingesetztem Sensor in zwei verschiedenen Schnittansichten; und
- Figur 3: Ergebnisse einer Berechnung von Biegemomenten innerhalb der Mutter aus Figur 1a.

In den nachfolgend beschriebenen Figuren ist ein Ausführungsbeispiel einer erfindungsgemäßen Mutter 1 mit einem integrierten Sensor 10 dargestellt. In allen Ausführungsbeispielen kennzeichnen gleiche Bezugszeichen gleiche oder gleichwirkende Elemente. Aus Gründen der Übersichtlichkeit ist nicht in allen Figuren jedes Element mit einem Bezugszeichen versehen.

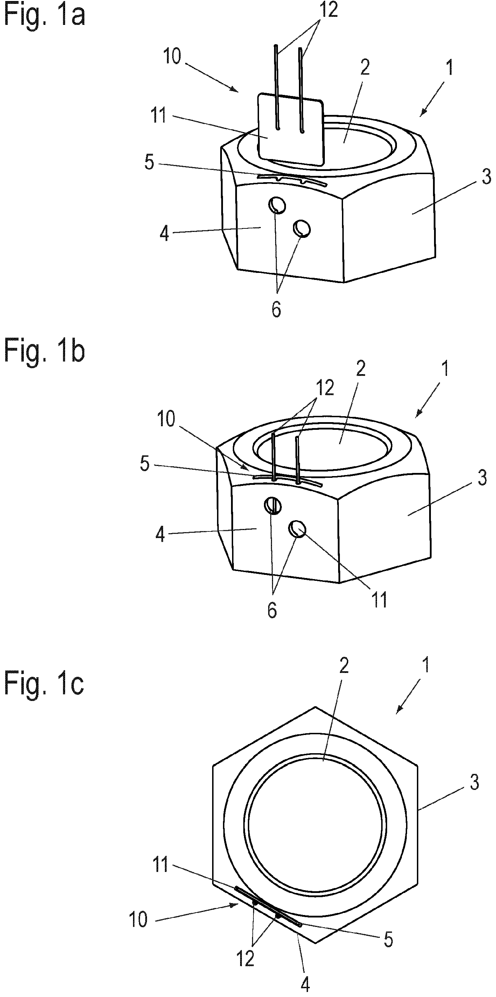

In Figur 1a ist eine Mutter 1 dargestellt, die ein Innengewinde 2 und eine Außenkontur 3 aufweist. Die Außenkontur 3 ist als eine Werkzeugaufnahme zum Festschrauben bzw. Lösen der Mutter 1 mit einem handelsüblichen Werkzeug ausgebildet. Vorliegend ist die Außenkontur 3 eine Mehrkantkontur, konkret eine Sechskantkontur. An der hier nicht sichtbaren Unterseite und der sichtbaren Oberseite der Mutter 1 sind Auflagenflächen ausgebildet, mit denen die Mutter 1 in einer Schraubverbindung in bekannter Weise auf einem zu befestigenden Bauteil, zum Beispiel einem Flansch bzw. einer zwischengelegten Unterlegscheibe, aufliegt.

Die Mutter 1 kann in ihrer Geometrie standardmäßig eingesetzten Muttern entspricht, beispielsweise gemäß DIN 933 oder DIN-EN-ISO 4017.

Der eingesetzte Sensor 10 dient der Erfassung einer Biegebelastung der Mutter 1 in einem befestigten, insbesondere hochfest vorgespannten Zustand.

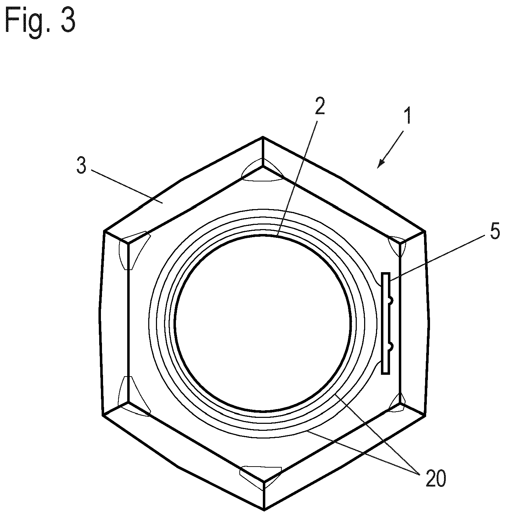

Über die Biegebelastung kann, wie im Zusammenhang mit Figur 3 noch näher erläutert wird, eine Höhe eine Schraubenvorspannkraft abgeleitet werden. Da die Notwendigkeit einer Erfassung einer Schraubenvorspannkraft in der Regel nur bei sicherheitsrelevanten hochfesten Schraubverbindungen gegeben ist, wird die Mutter 1 ein Innengewinde 2 einer Größe von mindestens M16, eher M20 oder größer aufweisen (oder einer vergleichbaren nicht-metrischen Größe). Bei entsprechend kleingewählter Größe des Sensors 10 kann jedoch eine erfindungsgemäße Mutter 1 auch in einer kleineren Größe, beispielsweise M14 oder M12 ausgebildet sein.

Zum Integrieren des Sensors 10 in die Mutter 1 ist in das Material der Mutter 1 zwischen dem Innengewinde 2 und der Außenkontur 3 eine Vertiefung eingebracht, in die der Sensor 10 eingesetzt wird. In der Figur 1a ist der Sensor 10 vor dem Einsetzen in diese Vertiefung dargestellt, wobei die Vertiefung als eine Tasche 5 ausgebildet ist, die einen flachen, quaderförmigen Hohlraum im Material der Mutter 1 bildet, in dem der Sensor 10 Platz findet. Die Vertiefung kann als Sacköffnung ausgebildet sein, indem sie nicht durchgängig bis zur Unterseite der Mutter 1 reicht. Sie kann in einer alternativen Ausgestaltung auch durchgehend ausgeformt sein. Die Vertiefung kann bereits im Herstellungsprozess der Mutter 1 geformt sein, oder auch nachträglich eingebracht sein. Letzteres ist beispielsweise über Fräsen, Bohren, Laserbearbeitung oder eine Funkenerosion möglich.

Die Figuren 1b und 1c zeigen den Sensor 10 eingesetzt in die Tasche 5 in verschiedenen Ansichten - in Figur 1b in einer räumlichen Ansicht und in Figur 1c in einer Draufsicht auf die Mutter 1.

Der Sensor 10 ist plattenförmig ausgebildet, beispielsweise indem er einen plattenförmigen Träger 11 aufweist, auf den ein Dehnungsmessstreifen aufgebracht ist, der eine Biegung des plattenförmigen Trägers 11 erfassen kann. Es kann ein resistiver Dehnungsmessstreifen eingesetzt werden, oder auch ein Sensor verwendet werden, der piezoelektrisch arbeitet, wobei eine Biegung in einer abgegebenen Spannung resultiert. Auch auf Oberflächenwellen basierende Sensoren (SAW - Surface Acoustic Waves) können eingesetzt werden.

Im dargestellten Beispiel weist der Sensor 10 zwei Anschlussleitungen 12 auf, die nach oben aus der Mutter 1 herausgeführt sind. Die Tasche 5 hat zu dem Zweck an einer Seite entsprechende Ausbuchtungen, um die Anschlussleitungen 12 herausführen zu können.

Weiter ist in dem gezeigten Beispiel die Tasche 5 parallel zu einer der Seitenflächen 4 der Außenkontur 3 orientiert. Auf diese Weise kann ein möglichst großer Sensor 10 eingesetzt werden. Der Sensor 10 kann klemmend in der Tasche 5 gehalten werden, wobei ein Formschluss zwischen den Sensor 10 und dem Material der Mutter 1 dafür sorgt, dass Biegebelastungen im Material der Mutter 1 gut auf den Sensor 10 übertragen werden.

Von der Seitenfläche 4 her, hinter der sich die Tasche 5 befindet, sind im dargestellten Beispiel zwei Bohrungen bis in die Tasche 5 eingebracht, die einen Zugang zu dem eingesetzten Sensor 10 ermöglichen. Die Bohrungen 6 können zusätzlich zur Befestigung genutzt werden, beispielsweise indem eine Verschweißung, insbesondere in einem Laser-Schweißprozess, oder eine Verlötung durch die Bohrungen 6 erfolgt. Auch ist eine Verklebung des Sensors 10 in der Tasche 5 denkbar, z.B. indem durch die Bohrungen 6 eine Vergussmasse in die Tasche 5 eingespritzt wird, die zu einer stoffschlüssigen Verbindung des Sensors 10 mit dem Material der Mutter 1 führt.

Die Anschlussleitungen 12 ragen im Beispiel frei nach oben aus der Mutter 1 heraus. Nicht dargestellt ist, dass ein Steckverbinder vorhanden sein kann, der es ermöglicht, die Anschlussleitungen 12 trennbar mit einer Auswerteschaltung zu verbinden. Es ist auch denkbar, eine Auswerteschaltung mit einem drahtlos arbeitenden Datenübertrager auf der Mutter 1 anzuordnen, um Messwerte des Sensors 10 drahtlos an einen Empfänger zu übertragen. Hierzu können bekannte Funkstandards, z.B. Bluetooth, eingesetzt werden. Auch ein Auslesen über einen RFID-Leser (Radio Frequency Identification) kann vorgesehen sein. Bei einem drahtlos übertragenden System kann ein Energiespeicher für die Auswerteschaltung bzw. den Datenübertrager eingesetzt sein und/oder eine Einheit zur Energiegewinnung aus der Umgebung, was auch als Energy-Harvesting bezeichnet wird. Beispielsweise kann Energie aus Licht oder Bewegung gewonnen werden.

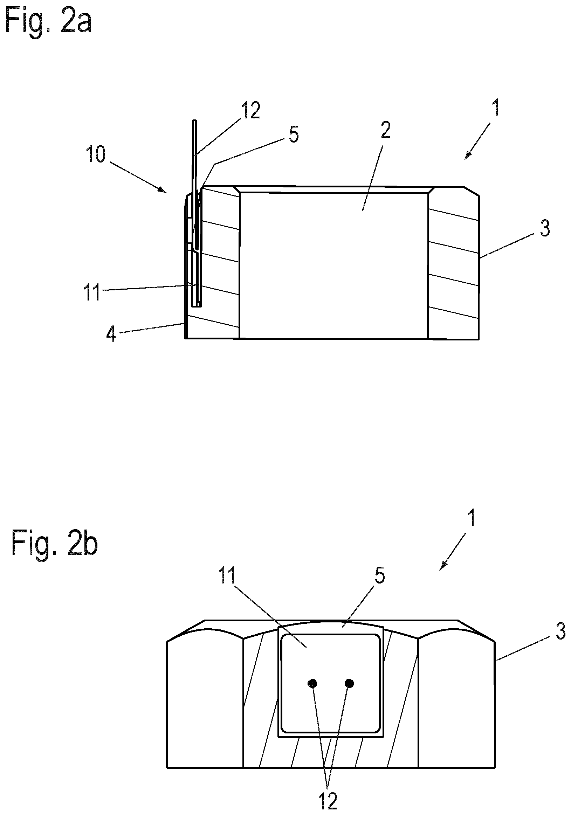

In den Figuren 2a und 2b sind ergänzend Schnittdarstellungen durch die Mutter 1 mit dem integrierten Sensor 10 wiedergegeben. Die Figur 2a zeigt einen Schnitt senkrecht durch den plattenförmigen Träger 11 des Sensors 10. Die Figur 2b zeigt einen Schnitt in der Ebene der Seitenflächen 4 bzw. des Trägers 11 des Sensors 10.

Figur 3 zeigt Ergebnisse einer Simulation einer Belastungssituation der Mutter 1 aus den Figuren 1a-2b. Die Mutter 1 ist in einer vorgespannten Situation in einer Draufsicht wieder gegeben, wobei die Belastungen in Form von Linien 20 dargestellt ist. Die verschiedenen Linien 20 zeigen unterschiedlich große Biegemomente. Entlang einer Linie 20 liegt jeweils ein betragsmäßig gleiches Biegemoment vor.

Es ist zu erkennen, dass die in axialer Richtung wirkende Vorspannung der Schraubverbindung zu Biegemomenten und damit Verformungen im Material der Mutter 1 führt, die bis in den Bereich hineinreichen, in dem der Sensor 10 angeordnet ist. Axiale in der Schraubverbindung wirkende Kräfte, also eine Höhe der Schraubenvorspannkraft der Schraubverbindung, können somit durch den Sensor 10 erfasst werden. Es ergibt sich eine in der Regel nichtlineare, aber monotone Abhängigkeit der Biegebelastung am Ort des Sensors 10 von der Größe der Schraubenvorspannkraft. Entsprechend kann die Schraubenvorspannkraft mathematisch eindeutig aus der gemessenen Biegung des Sensors 10 ermittelt werden.

### Bezugszeichenliste

- 1: Mutter
- 2: Innengewinde
- 3: Außenkontur
- 4: Seitenfläche
- 5: Tasche
- 6: Bohrung

- 10: Sensor
- 11: Träger
- 12: Anschlusskabel

- 20: Linie (jeweils gleichen Biegemoments)

## Patentansprüche

1. Mutter (1) mit einem Innengewinde (2) und einer Außenkontur (3), wobei zwischen dem Innengewinde (2) und der Außenkontur (3) von einer Oberseite der Mutter (1) ausgehend eine als Tasche ausgebildete Vertiefung eingebracht ist, in die ein Sensor (10) zur Messung einer belastungsbedingten Verformung der Mutter eingesetzt ist,
**dadurch gekennzeichnet, dass**
der Sensor (10) stoffschlüssig mit der Mutter (1) verbunden ist, wobei mindestens eine Bohrung (6) in eine Seitenfläche (4) der Außenkontur eingebracht ist, um eine stoffschlüssige Verbindung des Sensors (10) mit dem Material der Mutter (1) herzustellen.

2. Mutter (1) nach Anspruch 1, bei der die Tasche (5) einen quaderförmigen Hohlraum zur Aufnahme des Sensors (10) im Material der Mutter (1) formt.

3. Mutter (1) nach Anspruch 2, bei der der Sensor (10) plattenförmig ausgebildet ist.

4. Mutter (1) nach einem der Ansprüche 1 bis 3, bei der die Außenkontur (3) eine Mehrkantkontur, insbesondere eine Sechskantkontur ist.

5. Mutter (1) nach Anspruch **4,** bei der die Tasche (5) parallel zu einer Seitenfläche (4) der Mehrkantkontur ausgebildet ist.

6. Mutter (1) nach einem der Ansprüche 1 bis 5, bei der der Sensor (10) einen resistiven Dehnungsmessstreifen umfasst.

7. Mutter (1) nach einem der Ansprüche 1 bis 6, bei der der Sensor (10) piezoelektrisch arbeitet.

8. Mutter (1) nach einem der Ansprüche 1 bis 7, bei der der Sensor (10) mit dem Material der Mutter verschweißt, verlötet und/oder verklebt ist.

9. Mutter (1) nach einem der Ansprüche 1 bis 8, aufweisend einen Steckverbinder zur Kontaktierung des Sensors (10).

10. Mutter (1) nach einem der Ansprüche 1 bis 9, aufweisend eine Einheit zur drahtlosen Übertragung von Sensordaten des Sensors (10).

## Claims

1. Nut (1) having an internal thread (2) and an outer contour (3), wherein a recess in the form of a pocket is introduced between the internal thread (2) and the outer contour (3), starting from an upper side of the nut (1), into which recess a sensor (10) is inserted for measuring a load-induced deformation of the nut, **characterized in that**
the sensor (10) is connected to the nut (1) in a materially bonded manner, wherein at least one bore (6) is introduced into a side surface (4) of the outer contour in order to produce a materially bonded connection between the sensor (10) and the material of the nut (1).

2. Nut (1) according to claim 1, in which the pocket (5) forms a cuboid cavity for accommodating the sensor (10) in the material of the nut (1).

3. Nut (1) according to claim 2, in which the sensor (10) is formed in the shape of a plate.

4. Nut (1) according to one of claims 1 to 3, in which the outer contour (3) is a polygonal contour, in particular a hexagonal contour.

5. Nut (1) according to claim 4, in which the pocket (5) is formed parallel to a side surface (4) of the polygonal contour.

6. Nut (1) according to one of claims 1 to 5, in which the sensor (10) comprises a resistive strain gauge.

7. Nut (1) according to one of claims 1 to 6, in which the sensor (10) operates piezoelectrically.

8. Nut (1) according to one of claims 1 to 7, in which the sensor (10) is welded, soldered and/or bonded to the material of the nut.

9. Nut (1) according to one of claims 1 to 8, comprising a plug connector for contacting the sensor (10).

10. Nut (1) according to one of claims 1 to 9, comprising a unit for wireless transmission of sensor data of the sensor (10).

## Revendications

1. Écrou (1) avec un filetage intérieur (2) et un contour extérieur (3), dans lequel est ménagé entre le filetage intérieur (2) et le contour extérieur (3), à partir d'une face supérieure de l'écrou (1), un creux conformé comme une poche dans lequel est inséré un capteur (10) destiné à mesurer une déformation de l'écrou due à des contraintes, **caractérisé en ce que** le capteur (10) est lié par solidarité de matière à l'écrou (1), au moins un trou percé (6) étant formé dans une face latérale (4) du contour extérieur pour créer une liaison par solidarité de matière du capteur (10) au matériau de l'écrou (1).

2. Écrou (1) selon la revendication 1, dans lequel la poche (5) forme une cavité carrée pour recevoir le capteur (10) dans le matériau de l'écrou (1).

3. Écrou (1) selon la revendication 2, dans lequel le capteur (10) est en forme de plaque.

4. Écrou (1) selon l'une des revendications 1 à 3, dans lequel le contour extérieur (3) est un contour polygonal, en particulier un contour hexagonal.

5. Écrou (1) selon la revendication 4, dans lequel la poche (5) est formée parallèlement à une face latérale (4) du contour polygonal.

6. Écrou (1) selon l'une des revendications 1 à 5, dans lequel le capteur (10) comprend une jauge extensométrique résistive.

7. Écrou (1) selon l'une des revendications 1 à 6, dans lequel le capteur (10) fonctionne selon un principe piézoélectrique.

8. Écrou (1) selon l'une des revendications 1 à 7, dans lequel le capteur (10) est soudé, brasé et/ou collé au matériau de l'écrou.

9. Écrou (1) selon l'une des revendications 1 à 8, comportant un connecteur enfichable pour la mise en contact du capteur (10).

10. Écrou (1) selon l'une des revendications 1 à 9, comportant une unité pour la transmission sans fil de données de capteur du capteur (10).
